# EUROPEAN PATENT SPECIFICATION

(11) **EP 4 498 273 B1**
(45) Date of publication and mention of the grant of the patent: **24.06.2026**
(21) Application number: 24190759.1
(22) Date of filing: 24.07.2024
(51) Int. Cl.: G06F 21/57

(54) **INFORMATION PROCESSING DEVICE, ROBOT CONTROLLER, AND INFORMATION PROCESSING METHOD**
INFORMATIONSVERARBEITUNGSVORRICHTUNG, ROBOTERSTEUERUNG UND INFORMATIONSVERARBEITUNGSVERFAHREN
DISPOSITIF DE TRAITEMENT D'INFORMATIONS, CONTRÔLEUR DE ROBOT ET PROCÉDÉ DE TRAITEMENT D'INFORMATIONS

(30) Priority: 28.07.2023 JP 2023123027
(43) Date of publication of application: 29.01.2025
(73) Proprietor: Seiko Epson Corporation, Tokyo 160-8801 (JP)
(72) Inventor: OGASAWARA, Naoki, Suwa-shi, Nagano, 392-8502 (JP)
(74) Representative: MERH-IP Matias Erny Reichl Hoffmann Patentanwälte PartG mbB

(56) References cited:
- US-A1- 2015 046 717
- US-A1- 2019 114 429
- US-A1- 2022 179 960

## Description

### BACKGROUND

### 1. Technical Field

The present disclosure relates to an information processing device, a robot controller, and an information processing method.

### 2. Related Art

An information processing device has been studied in which a program is signed and stored, and the signature of the program is verified each time the program is activated. By signature verification, it is possible to detect whether or not a program has been falsified.
For example, JP-A-2019-175000 discloses an information processing device for sequentially activating a plurality of modules following the activation of a first module. The information processing device includes the first module, a second module, and a third module that are sequentially activated. The first module detects falsification of the second module and the third module by using verification information for verifying a signature of the second module, which will be activated next. After being activated by the first module, the second module activates the third module to be activated next.

According to such a configuration, when the plurality of modules are sequentially activated, the successful verification of the signature is set as a condition, and thus it is possible to provide a mechanism for detection of falsification in the system. Since detection of falsification of a plurality of modules is carried out using verification information stored in the first module, effective use of memory resources can be achieved.

The information processing device described in JP-A-2019-175000 has a problem in that it takes a long activation time because the plurality of modules are sequentially activated. The activation time can be shortened by increasing the operation speed of the CPU included in the information processing device, however, in that case, there is a problem in that the power consumption amount is increased.

US2019/114429A1 discloses a hardware configuration of multi function peripheral 100, which is provided with a CPU 101 and an embedded controller 113, which is provided with a CPU 115. The software modules held by the multi function peripheral 100 includes a boot program 209 inside the embedded controller 113, as a software module. Furthermore, the multi function peripheral 100 includes a BIOS 210, a loader 211, a kernel 212, native programs 213, a Java (registered trademark) program 214, a UI control unit 203, and a communication management unit 207. The boot program 209 is a program that is executed by the CPU 115 of the embedded controller 113 when the power source of the multi function peripheral 100 is turned on. The BIOS 210 is a program that is executed by the CPU 101 after the execution of the boot program 209. The loader 211 is a program executed by the CPU 101 after processing for the BIOS 210 completes. The kernel 212 is a program executed by the CPU 101 after processing for the loader 211 completes. A BIOS signature verification public key 300 is stored in the boot program 209, and a BIOS signature 302 and a loader verification public key 303 are stored in the BIOS 210. A loader signature 304 and a kernel verification public key 305 are stored in the loader 211. In addition, a kernel signature 306 and a native program verification public key 307 are stored in the kernel 212, and a native program signature 309 and a Java program verification public key 308 are stored in the native programs 213. Furthermore, a Java program signature 310 is stored in the Java program 214. In the multi function peripheral 100, the respective detection units for reference numerals 201, 202, and 204 to 206 perform alteration detection by verifying a respective program (respective module) that is to be activated next, and activating the next program if there is no problem.
US2015/046717A1 discloses in the SoC 20 of the semiconductor apparatus 10, the controller which executes the firmware and the boot loader/operating system is the single CPU 21. However, such a configuration is also possible that a controller performing verification and a processor executing the operating system separately exist, for example, a configuration in which boot processing is performed only by a simple microcontroller, and a higher-speed processor processes the operating system.
US2022/179960A1 discloses that in an area of internal, non-volatile memory of the security processor 108, the security processor maintains firmware management parameters (FWMP), security processor firmware (SPFW), generated hash values, and other data. The security processor 108 verifies the security processor firmware (e.g., referred to in some systems as "Cr50") using an internal verification process before executing the security processor firmware.

### SUMMARY

The present invention is defined by the independent claims. In the following, parts of the description and drawings referring to examples which do not necessarily comprise all features of the invention as currently claimed are not represented as embodiments of the invention but as examples useful for understanding the embodiments of the invention. Embodiments of this application provide an information processing device according to an application example of the present disclosure includes a first CPU core; a second CPU core having an operating frequency higher than that of the first CPU core; and a program storage section configured to store a first module, a second module, a third module having a capacity size larger than that of the second module, a second module electronic signature, and a third module electronic signature, wherein the first CPU core is configured to, by executing the first module, perform a second module verification process of verifying the second module based on the second module electronic signature and the second CPU core is configured to, by executing the second module, perform a third module verification process of verifying the third module based on the third module electronic signature.

A robot controller according to the application example of the present disclosure controls the operation of the robot controller includes a first CPU core; a second CPU core having an operating frequency higher than that of the first CPU core; and a program storage section configured to store a first module, a second module, a third module having a capacity size larger than that of the second module, a second module electronic signature, and a third module electronic signature, wherein the first CPU core is configured to, by executing the first module, perform a second module verification process of verifying the second module based on the second module electronic signature and the second CPU core is configured to, by executing the second module, perform a third module verification process of verifying the third module based on the third module electronic signature.

An information processing method according to the application example of the present disclosure, a method for performing information processing by using a first CPU core, a second CPU core, and a program storage section for storing a first module, a second module, a third module, a second module electronic signature, and a third module electronic signature, wherein the second CPU core has an operating frequency higher than that of the first CPU core, the third module has a larger capacity size than the second module, the first CPU core is configured to, by executing the first module, perform a second module verification process of verifying the second module based on the second module electronic signature, and the second CPU core is configured to, by executing the second module, perform a third module verification process of verifying the third module based on the third module electronic signature.

### BRIEF DESCRIPTION OF THE DRAWINGS

FIG. 1 is a conceptual diagram showing a configuration example of a robot system.
FIG. 2 is a block diagram showing a hardware configuration example of a robot controller shown in FIG. 1.
FIG. 3 is a block diagram showing the hardware configuration example of a processor shown in FIG. 2.
FIG. 4 is a functional block diagram showing a function of a main board shown in FIG. 2.
FIG. 5 is a memory map of a program storage section of the main board shown in FIG. 2.
FIG. 6 is a flowchart for explaining an activation method (information processing method according to the embodiment) of the main board shown in FIG. 2.
FIG. 7 is a conceptual diagram for explaining signature verification of an IPL (first module) by a boot loader.
FIG. 8 is a conceptual diagram for explaining signature verification of a deployment program (second module) by the IPL.
FIG. 9 is a conceptual diagram for explaining signature verification of a compressed file (third module) by the deployment program.

### DESCRIPTION OF EMBODIMENTS

Hereinafter, an information processing device, a robot controller, and an information processing method of the present disclosure will be described in detail based on a preferred embodiment shown in the accompanying drawings.

### 1. Robot system

First, a robot system including a robot controller according to an embodiment will be described.

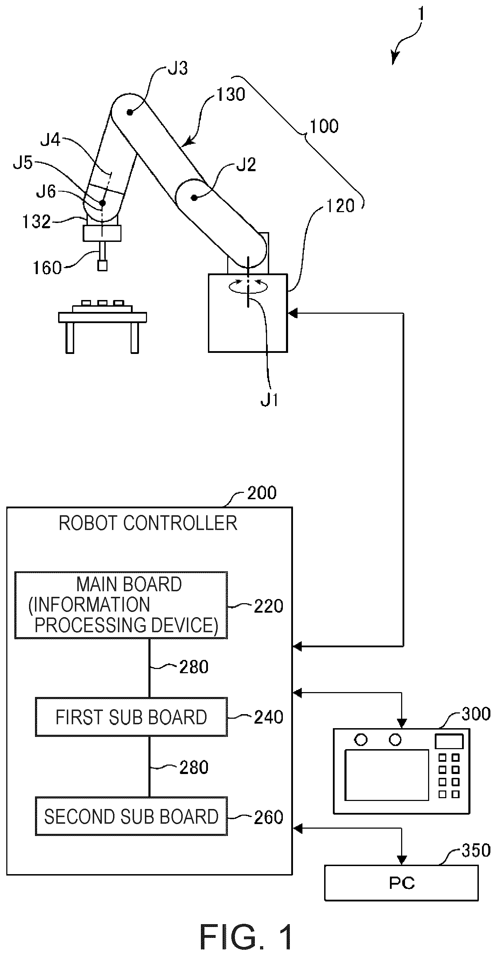

FIG. 1 is a conceptual diagram showing a configuration example of a robot system 1.

The robot system 1 shown in FIG. 1 includes a robot 100, a robot controller 200 (robot controller according to the embodiment), a teach pendant 300, and a computer 350.

### 1.1. Robot

The robot 100 shown in FIG. 1 includes a base 120 and a robot arm 130. The robot arm 130 includes six arms connected in order from the base 120 side, and six joints J1 to J6 connecting between the base 120 and the arms and between the arms. Of the six joints J1 to J6 shown in FIG. 1, three joints J2, J3, and J5 are bending joints, and the other three joints J1, J4, and J6 are twisting joints. Each of the joints from joint J1 to J6 includes a motor as a driving source and an encoder for detecting the rotation amount of the motor, that is, the position information of the motor, which are not shown. In this specification, the motor and the encoder are collectively referred to as a servo motor.

An arm end 132 is provided at the distal end of the robot arm 130, that is, at the end of the robot arm 130 opposite to the base 120. An end effector 160 is attached to the arm end 132. The end effector 160 is attachably and detachably attached. As the end effector 160, for example, a hand for gripping a workpiece, a suction tool for suctioning a workpiece, or the like can be given.

### 1.2. Robot controller

The robot controller 200 shown in FIG. 1 includes a main board 220 (information processing device according to the embodiment), a first sub board 240, and a second sub board 260. Each of these substrates can communicate with each other via a communication interface 280.

### 1.2.1. Main board

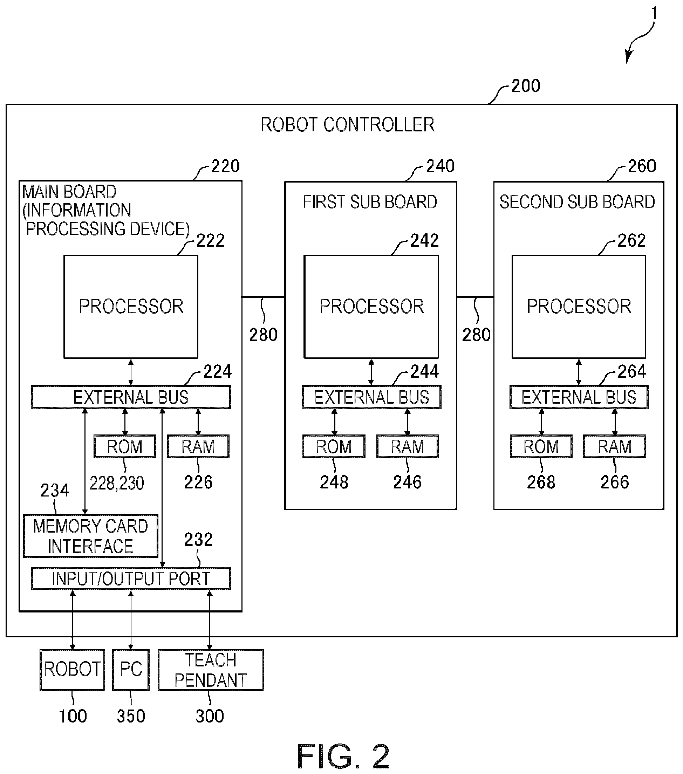

FIG. 2 is a block diagram showing a hardware configuration example of the robot controller 200 shown in FIG. 1.

The main board 220 (information processing device according to the embodiment) shown in FIG. 2 includes a processor 222, an external bus 224, a RAM 226, a ROM 228, an input/output port 232, and a memory card interface 234. Note that the RAM is a random access memory, and the ROM is a read-only memory.

The processor 222 shown in FIG. 2 implements various functions by executing the programs deployed in the RAM 226 and the programs stored in the ROM 228.

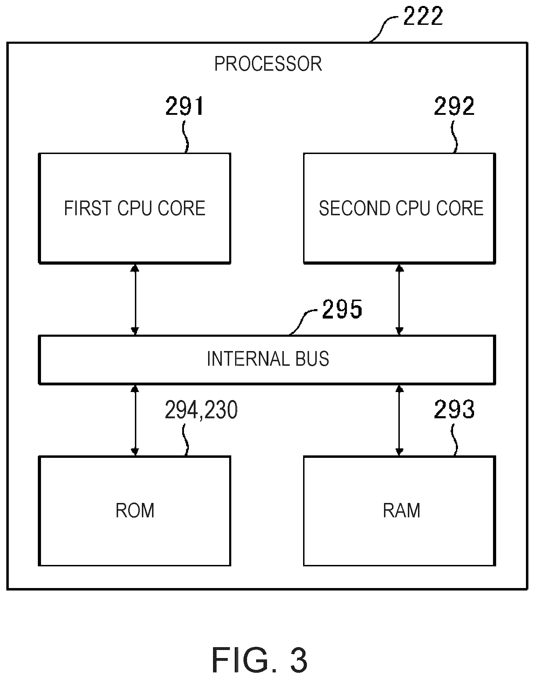

FIG. 3 is a block diagram showing the hardware configuration example of the processor 222 shown in FIG. 2.

The processor 222 shown in FIG. 3 is a system on a chip (SoC) element. The SoC element is an element in which CPU cores, other devices, and the like are mixedly mounted on one chip (die). The processor 222 shown in FIG. 3 includes a first CPU core 291, a second CPU core 292, a RAM 293, a ROM 294, and an internal bus 295. The CPU is a Central Processing Unit. By using such an SoC element as the processor 222, it is possible to further reduce the power consumption amount of the main board 220, and it is possible to achieve miniaturization and cost reduction. Note that the RAM 293 and the ROM 294 may be provided as necessary, and may be omitted. It is not essential that the processor 222 is the SoC element, for example, may be a system in a package (SiP) or the like, the first CPU core 291 and the second CPU core 292 may be independent elements from each other.

The second CPU core 292 has a higher operating frequency than the first CPU core 291. On the other hand, when the operating frequency is high, the power consumption also tends to be high. In view of the above, by mixedly mounting the CPU cores having different operating frequencies on the main board 220, when the programs to be executed by each CPU core is appropriately selected, it is possible to increase the speed of information processing in the main board 220 while suppressing the power consumption amount of the main board 220.

The number of CPU cores included in one processor 222 is not limited to two shown in FIG. 3, but may be three or more.

The operating frequency of the second CPU core 292 only needs to be higher than the operating frequency of the first CPU core 291, but it is desirably 1.5 times or more, more desirably 2.0 times or more. By this, a sufficient increase in speed is possible for the modules executed by the second CPU core 292. On the other hand, the upper limit value of the operating frequency of the second CPU core 292 may not be particularly set, but in consideration of the balance between the power consumption and the operating frequency, it is desirably 5.0 times or less of the operating frequency of the first CPU core 291, more desirably 3.0 times or less.

Although the power consumption of the first CPU core 291 is lower than the power consumption of the second CPU core 292, the difference corresponds to the difference in operating frequency in many cases. As an example, the power consumption of the first CPU core 291 is desirably 50% or less of the power consumption of the second CPU core 292, more desirably 30% or less, and still more desirably 10% or less. On the other hand, the lower limit value of the power consumption of the first CPU core 291 may not be particularly set, but is desirably 1% or more of the power consumption of the second CPU core 292 in consideration of the operating frequency.

The RAM 293 temporarily stores the programs to be executed by the processor 222, read data, and the like. As the RAM 293, for example, a dynamic random access memory (DRAM) or the like can be given.

The ROM 294 stores the programs to be executed by the processor 222, other data, and the like. Examples of the ROM 294 include a mask ROM, an antifuse-type programmable read-only memory (PROM), an electrically erasable programmable read-only memory (EEPROM) (registered trademark), and a flash read-only memory (flash ROM).

The external bus 224 is a transmission path for connecting the processor 222 to the RAM 226 and the ROM 228 to enable mutual communication.

The RAM 226 temporarily stores the programs to be executed by the processor 222, read data, and the like. As the RAM 226, for example, a DRAM and the like can be given.

The ROM 228 stores the programs to be executed by the processor 222, other data, and the like. As the memory ROM 228, for example, an EEPROM (registered trademark), a flash ROM, or the like are exemplified. Note that ROM 228 may be an external type storage element.

The above mentioned ROM 294 and the above mentioned ROM 228 constitute a "program storage section 230."

The input/output port 232 is an interface for performing communication between each section of the main board 220 and other devices. As the input/output port 232, for example, a digital input/output port such as a universal serial bus (USB), an Ethernet (registered trademark) port, a video output port, or the like are exemplified. Note that the input/output port 232 may be configured to download the programs or data from the internet space.

The memory card interface 234 is an interface in which a memory card (not shown) can be attached and detached, and in which writing to and reading from the memory card are performed. Note that the memory card interface 234 may be provided as necessary, and may be omitted.

### 1.2.2. First sub board

The first sub board 240 shown in FIG. 2 includes a processor 242, an external bus 244, a RAM 246, and a ROM 248.

The processor 242 implements various functions by executing the programs deployed in the RAM 246 and the programs stored in the ROM 248. As the processor 242, for example, a microprocessor, the SoC element, or the like are exemplified. Part or all of the processor 242 may be constituted by a device such as an ASIC, an FPGA, or the like.

The external bus 244 allows communication between the processor 242 and the RAM 246 and the ROM 248. The RAM 246 temporarily stores the programs to be executed by the processor 242, read data, and the like. The ROM 248 stores the programs to be executed by the processor 242, other data, and the like. For the RAM 246 and the ROM 248, for example, the elements listed as the RAM 226 and the ROM 228 described above are used.

### 1.2.3. Second sub board

The second sub board 260 shown in FIG. 2 includes a processor 262, an external bus 264, a RAM 266, and a ROM 268.

The processor 262 implements various functions by executing the programs deployed in the RAM 266 and the programs stored in the ROM 268. The processor 262, for example, a microprocessor, the SoC element, or the like are exemplified. Part or all of the processor 262 may be constituted by a device such as an ASIC, an FPGA, or the like.

The external bus 264 allows communication between the processor 262 and the RAM 266 and the ROM 268. The RAM 266 temporarily stores the programs to be executed by the processor 262, read data, and the like. The ROM 268 stores the programs to be executed by the processor 262, other data, and the like. For the RAM 266 and the ROM 268, for example, the elements listed as the RAM 226 and the ROM 228 described above are used.

### 1.2.4. Communication interface

The communication interface 280 is a transmission path for transmitting the programs, data, or the like, and is, for example, a serial communication interface such as PCI or PCI Express (registered trademark).

Although the hardware configuration example of the robot controller 200 has been described above, the hardware configuration is not limited thereto. For example, the first sub board 240 and the second sub board 260 may be provided as necessary, and may be omitted.

### 1.2.5. Functional section

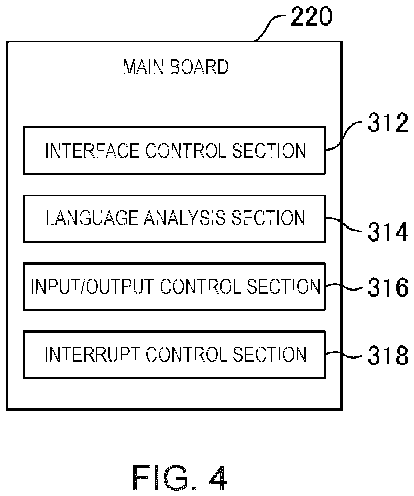

FIG. 4 is a functional block diagram showing the function of the main board 220 shown in FIG. 2.

The main board 220 shown in FIG. 4 has, as functional sections, an interface control section 312, a language analysis section 314, an input/output control section 316, and an interrupt control section 318. The functions of these functional sections are realized by the processor 222 executing the programs deployed in the RAM 226 of the main board 220 or the programs stored in the ROM 228. Note that the functional sections described above are examples of the case where the main board 220 is used for the robot controller 200. Therefore, the functional sections are appropriately selected according to the use of the main board 220.

The interface control section 312 controls communication between the main board 220, the first sub board 240, and the second sub board 260, for example.

The language analysis section 314 reads and analyzes a robot language describing the operation of the robot 100. An operation program of the robot 100 is received from the computer 350 via the input/output control section 316 (to be described later), and the operation program is analyzed to acquire target position information of the robot arm 130. The target position information is information about a target position, which is a target point to which the control point of the robot arm 130 is moved, and is, for example, data indicating coordinates of the target position.

The input/output control section 316 controls connections with the teach pendant 300 connected to the main board 220, the computer 350, and other peripheral devices.

The interrupt control section 318 controls a process (interrupt process) of branching from one program being executed to another program.

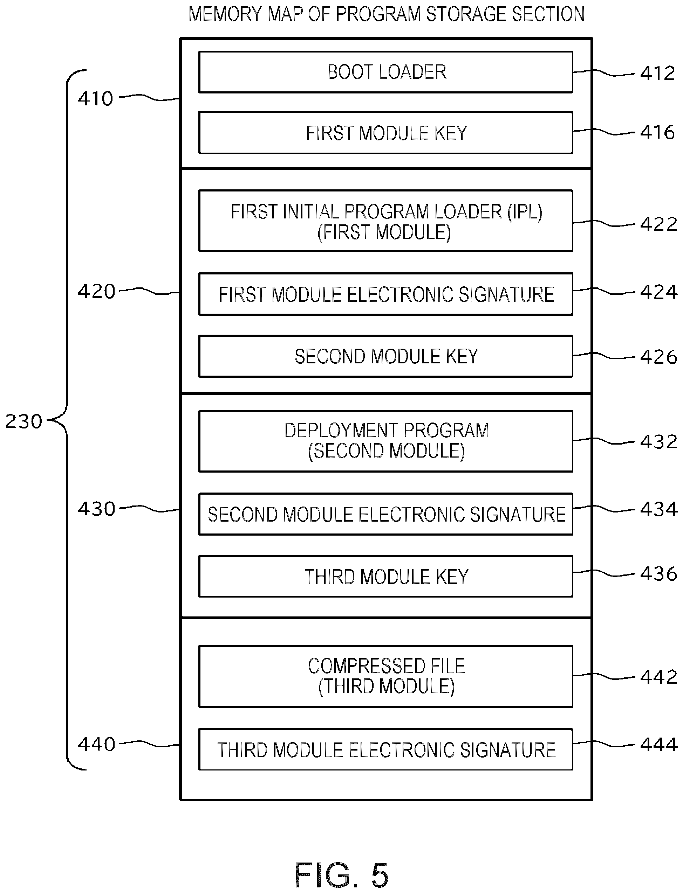

FIG. 5 is a memory map of the program storage section 230 of the main board 220 shown in FIG. 2. Note that the memory map shown in FIG. 5 is an example, and is not limited thereto.

As shown in FIG. 5, the program storage section 230 of the main board 220 includes memory spaces 410, 420, 430, and 440. Each of these memory spaces 410, 420, 430, and 440 is an address space accessible by the processor 222. Note that these memory spaces 410, 420, 430, and 440 may be allocated to a plurality of devices, for example, to the ROM 294 and the ROM 268. Each memory space 410, 420, 430, and 440 may be divided into a plurality of units and allocated to the plurality of devices.

A boot loader 412 and a first module key 416 are stored in the memory space 410. Note that since the boot loader 412 that is activated first after the main board 220 is energized is stored in the memory space 410, it is desirable that the memory space 410 be allocated to a non-rewritable device.

An initial program loader 422 (first module), an first module electronic signature 424, and a second module key 426 are stored in the memory space 420. Note that in the present application, the initial program loader is also referred to as "IPL".

A deployment program 432 (second module), a second module electronic signature 434, and a third module key 436 are stored in the memory space 430.

A compressed file 442 (third module) and a third module electronic signature 444 are stored in the memory space 440. Note that the third module may include elements other than the compressed file 442.

The boot loader 412 is executed by the processor 222 immediately after the main board 220 is energized. The boot loader 412 has a function of signature verification of an IPL 422.

The IPL 422 is executed by the processor 222 following the boot loader 412. The IPL 422 has a function of signature verification of the deployment program 432.

The deployment program 432 is executed by the processor 222 after the IPL 422. The deployment program 432 has a function for signature verification of the compressed file 442 and a function to decompress the compressed file 442 and deploy it to the RAM 226.

The boot loader 412, the IPL 422, and the deployment program 432 as described above are all programs necessary for the activation of the main board 220. By these programs being executed by the processor 222, the activation (secure boot) of the main board 220 is completed.

The compressed file 442 is a file obtained by compressing an OS (operating system), an application, a root file system, and the like. The compressed file 442 is usually a binary format file. The program or the like stored in the compressed file 442 is a program or the like necessary for information processing. By the processor 222 executing these programs deployed in RAM 226, the functions of the functional sections of the main board 220 described above are realized.

The compressed file 442 has a larger capacity size than the deployment program 432. In other words, the capacity size of the deployment program 432 is smaller than that of the compressed file 442. The capacity size refers to the amount of capacity (file size) occupied in the program storage section 230.

### 1.3. Activation method of main board

Next, an activating method of the main board 220 shown in FIG. 2 (information processing method according to the embodiment) will be described.

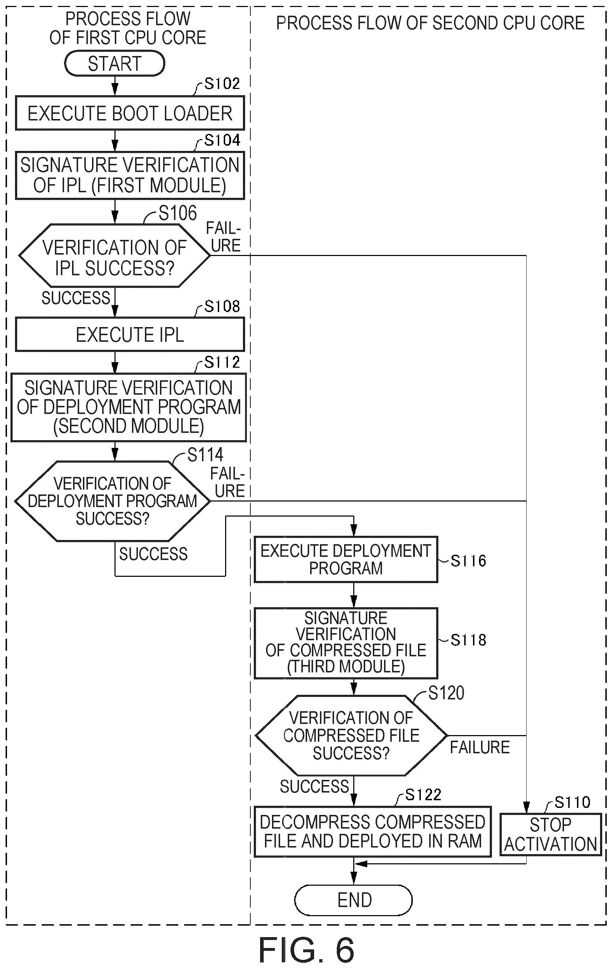

FIG. 6 is a flowchart for explaining the activating method (information processing method according to the embodiment) of the main board 220 shown in FIG. 2. Note that in FIG. 6, the flow shared by the first CPU core 291 and the flow shared by the second CPU core 292 are shown separately.

The activating method of the main board 220 shown in FIG. 6 includes steps S102 to S122.

After the main board 220 is powered on, the process proceeds to step S102. In step S102, the first CPU core 291 executes the boot loader 412 stored in the memory space 410.

In step S104, the executed boot loader 412 performs a first module verification process. In the first module verification process, the signature verification of the IPL 422 (first module) stored in the memory space 410 is verified based on the first module key 416 stored in the memory space 420 and the first module electronic signature 424 stored in the memory space 420.

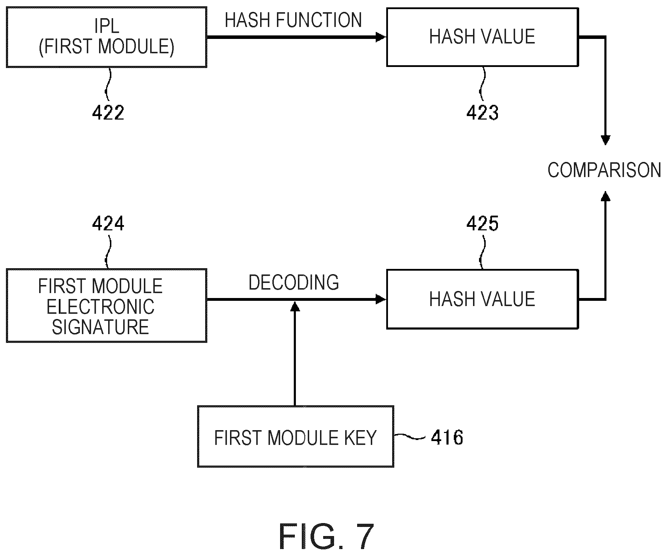

FIG. 7 is a conceptual diagram for explaining signature verification of the IPL 422 (first module) by the boot loader 412.

When the first CPU core 291 executes the boot loader 412, the executed boot loader 412 applies the IPL 422 to a hash function. By this, a hash value 423 is obtained. The hash function is a function for returning output data (hash value) of a fixed length from data of an arbitrary length and, for example, include SHA-256, SHA-384, SHA-512, or the like.

On the other hand, the boot loader 412 decrypts the first module electronic signature 424 using the first module key 416. By this, a hash value 425 is obtained. The first module key 416 may be a common key or a public key.

Then, the boot loader 412 compares the hash value 423 with the hash value 425. If the values are the same, it means that the integrity and authenticity of the IPL 422 have been confirmed, so it is assumed that the signature verification for the IPL 422 has succeeded. On the other hand, if the values are different, it is assumed that the signature verification for the IPL 422 has failed.

Note that the first CPU core 291 may directly read out the IPL 422 stored in the program storage section 230, or may once copy the IPL 422 to the RAM 226 and then read it out from the RAM 226. In the latter case, it is useful because the signature verification for the IPL 422 can be performed in a shorter time due to the good accessibility to RAM 226, although the copying takes extra time.

The boot loader 412 may be omitted, but in the present embodiment, the boot loader 412 is configured to perform signature verification of the IPL 422. By this, the integrity and authenticity of the IPL422 can be confirmed, and the main board 220 can be activated while ensuring higher safety. By providing both the boot loader 412 and the IPL 422, flexibility of the activating program can be secured.

In step S106, if the signature verification in step S104 is successful, the flow branches to step S108. On the other hand, if the signature verification in step S104 fails, the flow branches to step S110. In step S110, the activation of the main board 220 is stopped.

In step S108, the first CPU core 291 executes the IPL 422 (first module).

In step S112, the executed IPL 422 performs a second module verification process. In the second module verification process, the signature verification of the deployment program 432 (second module) stored in the memory space 430 is verified based on the second module key 426 stored in the memory space 420 and the second module electronic signature 434 stored in the memory space 430.

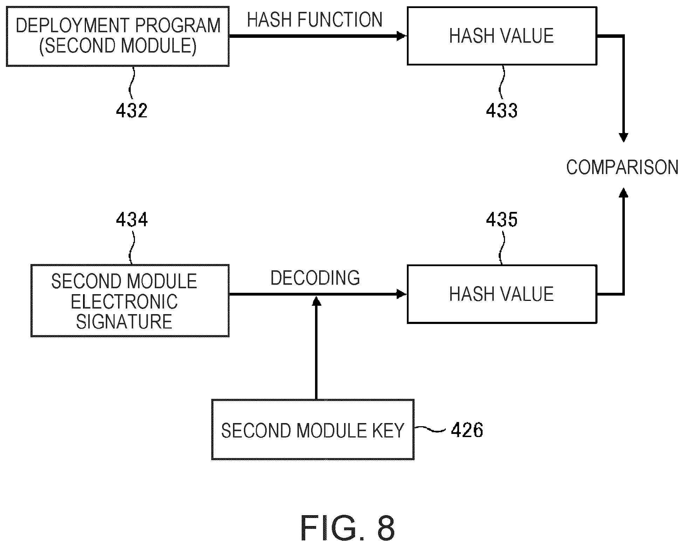

FIG. 8 is a conceptual diagram for explaining signature verification of the deployment program 432 (second module) by the IPL 422.

When the first CPU core 291 executes the IPL 422, the executed IPL 422 applies the deployment program 432 to the hash function. By this, a hash value 433 is obtained.

On the other hand, IPL 422 decrypts the second module electronic signature 434 using the second module key 426. By this, a hash value 435 is obtained. The second module key 426 may be a common key or a public key.

Then, the IPL 422 compares the hash value 433 with the hash value 435. If the values are the same, it means that the integrity and authenticity of the deployment program 432 have been confirmed, so it is assumed that the signature verification for the deployment program 432 has succeeded. On the other hand, if the values are different, it is assumed that the signature verification for the deployment program 432 has failed.

Note that as described above, the capacity size of the deployment program 432 is smaller than that of the compressed file 442. Therefore, even if the first CPU core 291 with a relatively low operating frequency is used in the signature verification for the deployment program 432, the required time does not need to be so long. On the other hand, the power consumption of the first CPU core 291 is lower than that of the second CPU core 292. For this reason, in the signature verification for the deployment program 432, the power consumption amount can be kept low.

The first CPU core 291 may directly read out the deployment program 432 stored in the program storage section 230, or may once copy the deployment program 432 to the RAM 226 and then read it out from the RAM 226. In the latter case, it is useful because the signature verification for the deployment program 432 can be performed in a shorter time due to the good accessibility to RAM 226, although the copying takes extra time.

In step S114, if the signature verification in step S112 is successful, the flow branches to step S116. On the other hand, if the signature verification in step S112 fails, the flow branches to step S110.

In step S116, the second CPU core 292 executes the deployment program 432.

In step S118, the executed deployment program 432 performs a third module verification process. In the third module verification process, the signature verification of the compressed file 442 (third module) stored in the memory space 440 is verified based on the third module key 436 stored in the memory space 430 and the third module electronic signature 444 stored in the memory space 440.

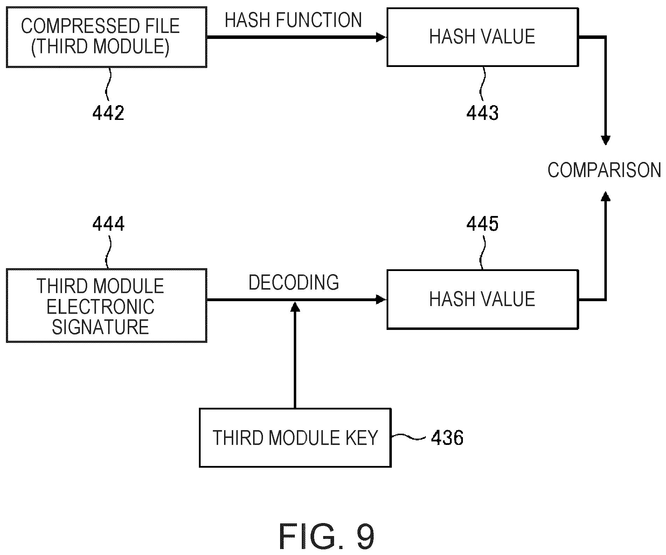

FIG. 9 is a conceptual diagram for explaining signature verification of the compressed file 442 (third module) by the deployment program 432.

When the second CPU core 292 executes the deployment program 432, the executed deployment program 432 applies the compressed file 442 to the hash function. By this, a hash value 443 is obtained.

On the other hand, the deployment program 432 decrypts the third module electronic signature 444 using the third module key 436. By this, a hash value 445 is obtained. The third module key 436 may be a common key or a public key.

Then, the deployment program 432 compares the hash value 443 with the hash value 445. If the values are the same, it means that the integrity and authenticity of the compressed file 442 have been confirmed, so it is assumed that the signature verification for the compressed file 442 has succeeded. On the other hand, if the values are different, it is assumed that the signature verification for the compressed file 442 has failed.

Note that as described above, the capacity size of the compressed file 442 is larger than that of the deployment program 432. However, since the second CPU core 292 having a relatively high operating frequency is used in the signature verification for the compressed file 442, the required time does not need to be so long. Although the power consumption amount of the second CPU core 292 is higher than that of the first CPU core 291, the power consumption amount of the second CPU core 292 can be kept low because the time required for signature verification of the compressed file 442 can be shortened. Therefore, on the main board 220, it is possible to increase the speed of information processing including the signature verification while suppressing the power consumption amount.

The second CPU core 292 may directly read out the compressed file 442 stored in the program storage section 230, or may once copy the compressed file 442 to the RAM 226 and then read it out from the RAM 226. In the latter case, it is useful because the signature verification for the compressed file 442 can be performed in a shorter time due to the good accessibility to RAM 226, although the copying takes extra time.

In step S120, if the signature verification in step S118 is successful, the flow branches to step S122. On the other hand, if the signature verification in step S118 fails, the flow branches to step S110.

In step S122, the executed deployment program 432 decompresses the compressed file 442 and deploys it to the RAM 226. Since the deployment program 432 is executed by the second CPU core 292, these decompression and deployment processes can be performed in a short time, and the power consumption amount can be suppressed.

As described above, the main board 220 can be activated.

According to the information processing method as described above, it is possible to increase the speed of the information processing including the signature verification of the program while suppressing the power consumption amount. It is possible to realize the main board 220 (information processing device) and the robot controller 200 that are capable of increasing the speed of the information processing including the signature verification of the program, while suppressing the power consumption amount. This can contribute to the reduction of the environmental load caused by the robot system 1. In a case where the robot system 1 operates with electric power from a battery (storage battery), it is possible to contribute to the extension of the driving time while suppressing a decrease in the information processing capability of the robot controller 200.

According to the above described information processing method, the boot loader 412, the IPL 422, and the deployment program 432 are configured to sequentially perform signature verification of the next program to be executed. Therefore, it is possible to prevent execution of a program whose integrity and authenticity have not been confirmed, and it is possible to activate the main board 220 while ensuring higher safety.

Note that the first module key 416, the second module key 426, and the third module key 436 may be the same, different keys can be used because in the present embodiment, the keys are prepared individually. By this, the security of each signature verification can be further enhanced.

### 2. Effect of the above embodiment

As described above, the main board 220 as the information processing device according to the embodiment includes the first CPU core 291, the second CPU core 292, and the program storage section 230. The second CPU core 292 has a higher operating frequency than the first CPU core 291. The program storage section 230 stores the IPL 422 (first module), the deployment program 432 (second module), the compressed file 442 (third module) whose capacity size is larger than that of the deployment program 432, the second module electronic signature 434, and the third module electronic signature 444.

Then, by executing the IPL 422, the first CPU core 291 performs the second module verification process of verifying the deployment program 432 based on the second module electronic signature 434.

By executing the deployment program 432, the second CPU core 292 performs the third module verification process of verifying the compressed file 442 based on the third module electronic signature 444.

According to such a configuration, the capacity size of the deployment program 432 is smaller than that of the compressed file 442. Therefore, even if the first CPU core 291 with a relatively low operating frequency is used in the second module verification process, the required time does not need to be so long. On the other hand, the power consumption of the first CPU core 291 is lower than that of the second CPU core 292. For this reason, in the second module verification process, the power consumption amount can be kept low. The capacity size of the compressed file 442 is larger than that of the deployment program 432. Therefore, even if the second CPU core 292 with a relatively high operating frequency is used in the third module verification process, the required time does not need to be so long. On the other hand, although the power consumption of the second CPU core 292 is higher than that of the first CPU core 291, the power consumption amount can be kept low because the required time is short. Therefore, on the main board 220, it is possible to increase the speed of information processing including the signature verification while suppressing the power consumption amount.

In the embodiment, the RAM 226 is provided, and the second CPU core 292 performs a process of deploying the compressed file 442 included in the third module to RAM 226.

According to such a configuration, the decompression and deployment processes of the compressed file 442 can be performed in a short time, and the power consumption amount can also be suppressed.

In the above embodiment, the program storage section 230 further stores the boot loader 412 and the first module electronic signature 424. Then, by executing the boot loader 412 before the second module verification process, the first CPU core 291 performs the first module verification process. In the first module verification process, the IPL 422 (first module) is verified based on the first module electronic signature 424.

According to such a configuration, the integrity and authenticity of the IPL 422 (first module) can be confirmed, and the main board 220 can be activated while ensuring higher safety. By providing both the boot loader 412 and the IPL 422, flexibility of the activating program can be secured.

In the embodiment, the first module includes the initial program loader 422 (IPL), the second module includes the deployment program 432, and the third module includes the compressed file 442 that is deployed by the deployment program 432.

According to such a configuration, the IPL 422 and the deployment program 432 sequentially perform the signature verification of the next program to be executed. Therefore, it is possible to prevent execution of a program whose integrity and authenticity have not been confirmed, and it is possible to activate the main board 220 while ensuring higher safety.

In the embodiment, the first CPU core 291 and the second CPU core 292 are mixedly mounted on the SoC element.

According to such a configuration, it is possible to further reduce the power consumption amount of the main board 220, and it is possible to achieve miniaturization and cost reduction.

The robot controller 200 according to the embodiment is a robot controller for controlling the operation of the robot 100, and includes the first CPU core 291, the second CPU core 292, the RAM 226, and the program storage section 230. The second CPU core 292 has a higher operating frequency than the first CPU core 291. The program storage section 230 stores the IPL 422 (first module), the deployment program 432 (second module), the compressed file 442 (third module) whose capacity size is larger than that of the deployment program 432, the second module electronic signature 434, and the third module electronic signature 444.

Then, by executing the IPL 422, the first CPU core 291 performs the second module verification process of verifying the deployment program 432 based on the second module electronic signature 434.

By executing the deployment program 432, the second CPU core 292 performs the third module verification process of verifying the compressed file 442 based on the third module electronic signature 444.

According to such a configuration, it is possible to obtain the robot controller 200 in which the speed of information processing including signature verification is increased, while suppressing the power consumption amount.

The information processing method according to the embodiment is a method of performing information processing using the first CPU core 291, the second CPU core 292, the RAM 226, and the program storage section 230. The program storage section 230 stores the IPL 422 (first module), the deployment program 432 (second module), the compressed file 442 (third module), the second module electronic signature 434, and the third module electronic signature 444. The second CPU core 292 has a higher operating frequency than the first CPU core 291. Further, the compressed file 442 has a larger capacity size than the deployment program 432.

Then, the first CPU core is configured to, by executing the IPL 422, perform the second module verification process of verifying the deployment program 432 based on the second module electronic signature 434.

The second CPU core 292 is configured to, by executing the deployment program 432, perform the third module verification process of verifying the compressed file 442 based on the third module electronic signature 444.

According to such a configuration, it is possible to increase the speed of the information processing including the signature verification while suppressing the power consumption amount.

The information processing device, the robot controller, and the information processing method of the present disclosure have been described based on the shown embodiments, but the present disclosure is not limited thereto.

For example, in the information processing device and the robot controller of the present disclosure, the configuration of each part of the above embodiment may be replaced with an arbitrary configuration having a similar function, or another arbitrary configuration may be added. The information processing device of the present disclosure may be used for purposes other than controlling the operation of the robot. For example, the information processing device of the present disclosure may be used in a copying machine, a multifunction device, or the like. The information processing method of the present disclosure may be one in which an optional step is added to the above embodiment.

## Claims

1. An information processing device (220) comprising:
a first CPU core (291);
a second CPU core (292) having an operating frequency higher than that of the first CPU core; and
a program storage section (230) configured to store a first module (422), a second module (432), a third module (442) having a capacity size larger than that of the second module, a second module electronic signature, and a third module electronic signature, wherein
the first CPU core is configured to, by executing the first module, perform a second module verification process of verifying the second module based on the second module electronic signature and
the second CPU core is configured to, by executing the second module, perform a third module verification process of verifying the third module based on the third module electronic signature;
wherein the program storage section is configured to further store a boot loader (412) and a first module electronic signature (424) and the first CPU core is configured to, by executing the boot loader before the second module verification process, perform a first module verification process for verifying the first module based on the first module electronic signature.

2. The information processing device according to claim 1, further comprising:
a RAM (293), wherein
the second CPU core is configured to perform a process of deploying a compressed file included in the third module into the RAM.

3. The information processing device according to claim 1 or 2, wherein
the first module includes an initial program loader (422),
the second module includes a deployment program (432), and
the third module includes a compressed file (442) that is deployed by the deployment program.

4. The information processing device according to claim 1, wherein
the first CPU core and the second CPU core are mixedly mounted on an SoC element.

5. A robot controller (200) for controlling motion of a robot (100), the robot controller comprising:
a first CPU core (291);
a second CPU core (292) having an operating frequency higher than that of the first CPU core; and
a program storage section (230) configured to store a first module (422), a second module (432), a third module (442) having a capacity size larger than that of the second module, a second module electronic signature (434), and a third module electronic signature (444), wherein
the first CPU core is configured to, by executing the first module, perform a second module verification process of verifying the second module based on the second module electronic signature and
the second CPU core is configured to, by executing the second module, perform a third module verification process of verifying the third module based on the third module electronic signature;
wherein the program storage section is configured to further store a boot loader (412) and a first module electronic signature (424) and the first CPU core is configured to, by executing the boot loader before the second module verification process, perform a first module verification process for verifying the first module based on the first module electronic signature.

6. A method for performing information processing by using a first CPU core (291), a second CPU core (292), and a program storage section (230) for storing a first module (422), a second module (432), a third module (442), a second module electronic signature (434), and a third module electronic signature (444), wherein
the second CPU core has an operating frequency higher than that of the first CPU core,
the third module has a larger capacity size than the second module,
the first CPU core is configured to, by executing the first module, perform a second module verification process of verifying the second module based on the second module electronic signature, and
the second CPU core is configured to, by executing the second module, perform a third module verification process of verifying the third module based on the third module electronic signature;
wherein the program storage section is configured to further store a boot loader (412) and a first module electronic signature (424) and the first CPU core is configured to, by executing the boot loader before the second module verification process, perform a first module verification process for verifying the first module based on the first module electronic signature.

## Patentansprüche

1. Informationsverarbeitungsvorrichtung (220), umfassend:
einen ersten CPU-Kern (291);
einen zweiten CPU-Kern (292) mit einer höheren Betriebsfrequenz als der erste CPU-Kern; und
einen Programmspeicherabschnitt (230), der eingerichtet ist, ein erstes Modul (422), ein zweites Modul (432), ein drittes Modul (442) mit einer größeren Kapazität als das zweite Modul, eine elektronische Signatur des zweiten Moduls und eine elektronische Signatur des dritten Moduls zu speichern, wobei
der erste CPU-Kern eingerichtet ist, durch Ausführen des ersten Moduls, einen zweiten Modul-Verifizierungsprozess zum Verifizieren des zweiten Moduls basierend auf der elektronischen Signatur des zweiten Moduls durchzuführen, und
der zweite CPU-Kern eingerichtet ist, durch Ausführen des zweiten Moduls einen dritten Modul-Verifizierungsprozess zum Verifizieren des dritten Moduls basierend auf der elektronischen Signatur des dritten Moduls durchzuführen;
wobei der Programmspeicherabschnitt eingerichtet ist, weiter ein Startprogramm (412) und eine elektronische Signatur (424) des ersten Moduls zu speichern, und der erste CPU-Kern eingerichtet ist, durch Ausführen des Startprogramms vor dem zweiten Modul-Verifizierungsprozess einen ersten Modul-Verifizierungsprozess zum Verifizieren des ersten Moduls basierend auf der elektronischen Signatur des ersten Moduls durchzuführen.

2. Informationsverarbeitungsvorrichtung nach Anspruch 1, weiter umfassend:
einen RAM (293), wobei
der zweite CPU-Kern eingerichtet ist, einen Prozess zum Einrichten einer komprimierten Datei, die in dem dritten Modul beinhaltet ist, in dem RAM durchzuführen.

3. Informationsverarbeitungsvorrichtung nach Anspruch 1 oder 2, wobei
das erste Modul einen Urprogrammlader (422) beinhaltet,
das zweite Modul ein Einrichtungsprogramm (432) beinhaltet, und
das dritte Modul eine komprimierte Datei (442) beinhaltet, die durch das Einrichtungsprogramm eingerichtet wird.

4. Informationsverarbeitungsvorrichtung nach Anspruch 1, wobei
der erste CPU-Kern und der zweite CPU-Kern gemischt an einem SoC-Element montiert sind.

5. Robotersteuerung (200) zum Steuern einer Bewegung eines Roboters (100), wobei die Robotersteuerung umfasst:
einen ersten CPU-Kern (291);
einen zweiten CPU-Kern (292) mit einer höheren Betriebsfrequenz als der erste CPU-Kern; und
einen Programmspeicherabschnitt (230), der eingerichtet ist, ein erstes Modul (422), ein zweites Modul (432), ein drittes Modul (442) mit einer größeren Kapazität als das zweite Modul, eine elektronische Signatur (434) des zweiten Moduls und eine elektronische Signatur (444) des dritten Moduls zu speichern, wobei
der erste CPU-Kern eingerichtet ist, durch Ausführen des ersten Moduls, einen zweiten Modul-Verifizierungsprozess zum Verifizieren des zweiten Moduls basierend auf der elektronischen Signatur des zweiten Moduls durchzuführen, und
der zweite CPU-Kern eingerichtet ist, durch Ausführen des zweiten Moduls einen dritten Modul-Verifizierungsprozess zum Verifizieren des dritten Moduls basierend auf der elektronischen Signatur des dritten Moduls durchzuführen;
wobei der Programmspeicherabschnitt eingerichtet ist, weiter ein Startprogramm (412) und eine elektronische Signatur (424) des ersten Moduls zu speichern, und der erste CPU-Kern eingerichtet ist, durch Ausführen des Startprogramms vor dem zweiten Modul-Verifizierungsprozess einen ersten Modul-Verifizierungsprozess zum Verifizieren des ersten Moduls basierend auf der elektronischen Signatur des ersten Moduls durchzuführen.

6. Verfahren zum Durchführen einer Informationsverarbeitung unter Verwendung eines ersten CPU-Kerns (291), eines zweiten CPU-Kerns (292) und eines Programmspeicherabschnitts (230) zum Speichern eines ersten Moduls (422), eines zweiten Moduls (432), eines dritten Moduls (442), einer elektronischen Signatur (434) des zweiten Moduls und einer elektronischen Signatur (444) des dritten Moduls, wobei der zweite CPU-Kern eine höhere Betriebsfrequenz als der erste CPU-Kern hat,
das dritte Modul eine größere Kapazität als das zweite Modul hat,
der erste CPU-Kern eingerichtet ist, durch Ausführen des ersten Moduls, einen zweiten Modul-Verifizierungsprozess zum Verifizieren des zweiten Moduls basierend auf der elektronischen Signatur des zweiten Moduls durchzuführen, und
der zweite CPU-Kern eingerichtet ist, durch Ausführen des zweiten Moduls einen dritten Modul-Verifizierungsprozess zum Verifizieren des dritten Moduls basierend auf der elektronischen Signatur des dritten Moduls durchzuführen;
wobei der Programmspeicherabschnitt eingerichtet ist, weiter ein Startprogramm (412) und eine elektronische Signatur (424) des ersten Moduls zu speichern, und der erste CPU-Kern eingerichtet ist, durch Ausführen des Startprogramms vor dem zweiten Modul-Verifizierungsprozess einen ersten Modul-Verifizierungsprozess zum Verifizieren des ersten Moduls basierend auf der elektronischen Signatur des ersten Moduls durchzuführen.

## Revendications

1. Dispositif de traitement d'informations (220) comprenant :
un premier cœur de processeur (291) ;
un deuxième cœur de processeur (292) présentant une fréquence de fonctionnement plus élevée que celle du premier cœur de processeur ; et
une section de stockage de programme (230) configurée pour stocker un premier module (422), un deuxième module (432), un troisième module (442) présentant une capacité plus élevée que celle du deuxième module, une signature électronique de deuxième module et une signature électronique de troisième module, dans lequel
le premier cœur de processeur est configuré pour mettre un œuvre, par exécution du premier module, un processus de vérification de deuxième module permettant de vérifier le deuxième module sur la base de la signature électronique de deuxième module et
le deuxième cœur de processeur est configuré pour mettre en œuvre, par exécution du deuxième module, un processus de vérification de troisième module permettant de vérifier le troisième module sur la base de la signature électronique de troisième module ;
dans lequel la section de stockage de programme est configurée pour stocker en outre un chargeur de démarrage (412) et une signature électronique de premier module (424) et le premier cœur de processeur est configuré pour mettre en œuvre, par exécution du chargeur de démarrage avant le processus de vérification de deuxième module, un processus de vérification de premier module permettant de vérifier le premier module sur la base de la signature électronique de premier module.

2. Dispositif de traitement d'informations selon la revendication 1, comprenant en outre :
une mémoire vive (293), dans lequel
le deuxième cœur de processeur est configuré pour mettre en œuvre un processus de déploiement d'un fichier compressé inclus dans le troisième module dans la mémoire vive.

3. Dispositif de traitement d'informations selon la revendication 1 ou 2, dans lequel
le premier module inclut un chargeur de programme initial (422),
le deuxième module inclut un programme de déploiement (432), et
le troisième module inclut un fichier compressé (442), lequel est déployé par le programme de déploiement.

4. Dispositif de traitement d'informations selon la revendication 1, dans lequel
le premier cœur de processeur et le deuxième cœur de processeur sont montés de façon mixte sur un élément SoC.

5. Contrôleur de robot (200) destiné à contrôler le mouvement d'un robot (100), le contrôleur de robot comprenant :
un premier cœur de processeur (291) ;
un deuxième cœur de processeur (292) présentant une fréquence de fonctionnement plus élevée que celle du premier cœur de processeur ; et
une section de stockage de programme (230) configurée pour stocker un premier module (422), un deuxième module (432), un troisième module (442) présentant une capacité plus élevée que celle du deuxième module, une signature électronique de deuxième module (434) et une signature électronique de troisième module (444), dans lequel
le premier cœur de processeur est configuré pour mettre un œuvre, par exécution du premier module, un processus de vérification de deuxième module permettant de vérifier le deuxième module sur la base de la signature électronique de deuxième module et
le deuxième cœur de processeur est configuré pour mettre en œuvre, par exécution du deuxième module, un processus de vérification de troisième module permettant de vérifier le troisième module sur la base de la signature électronique de troisième module ;
dans lequel la section de stockage de programme est configurée pour stocker en outre un chargeur de démarrage (412) et une signature électronique de premier module (424) et le premier cœur de processeur est configuré pour mettre en œuvre, par exécution du chargeur de démarrage avant le processus de vérification de deuxième module, un processus de vérification de premier module permettant de vérifier le premier module sur la base de la signature électronique de premier module.

6. Procédé de mise en œuvre d'un traitement d'informations à l'aide d'un premier cœur de processeur (291), d'un deuxième cœur de processeur (292) et d'une section de stockage de programme (230) destinée à stocker un premier module (422), un deuxième module (432), un troisième module (442), un signature électronique de deuxième module (434) et une signature électronique de troisième module (444), dans lequel
le deuxième cœur de processeur présente une fréquence de fonctionnement plus élevée que celle du premier cœur de processeur,
le troisième module présente une capacité plus élevée que celle du deuxième module,
le premier cœur de processeur est configuré pour mettre un œuvre, par exécution du premier module, un processus de vérification de deuxième module permettant de vérifier le deuxième module sur la base de la signature électronique de deuxième module, et
le deuxième cœur de processeur est configuré pour mettre en œuvre, par exécution du deuxième module, un processus de vérification de troisième module permettant de vérifier le troisième module sur la base de la signature électronique de troisième module ;
dans lequel la section de stockage de programme est configurée pour stocker en outre un chargeur de démarrage (412) et une signature électronique de premier module (424) et le premier cœur de processeur est configuré pour mettre en œuvre, par exécution du chargeur de démarrage avant le processus de vérification de deuxième module, un processus de vérification de premier module permettant de vérifier le premier module sur la base de la signature électronique de premier module.
